# EUROPEAN PATENT APPLICATION

(11) **EP 4 822 217 A1**
(43) Date of publication of application: **14.10.2026**
(21) Application number: 26169294.1
(22) Date of filing: 30.03.2026
(51) Int. Cl.: F16H 48/24

(54) **BI-DIRECTIONAL DIFFERENTIAL CLUTCH FOR DETECTING DISENGAGEMENT**

(30) Priority: 08.04.2025 US 202519172827
(71) Applicant: American Axle & Manufacturing, Inc., Detroit, MI 48211 (US)
(72) Inventor: Wolgamott, Labon, Detroit, 48212 (US)
(74) Representative: Wächter, Jochen

(57) **Abstract**

A disconnecting differential assembly includes a housing configured to rotate about a first axis, a gearset having first and second side gears configured to transmit rotary power between the housing and the side gears, a first clutch element coupled to the first side gear for rotation therewith, a sleeve having an arcuate tongue, a second clutch element coupled to the sleeve and confronts the first clutch element, the sleeve and second clutch element can move between a first position where the clutch elements are spaced apart to rotationally decouple the first side gear from the sleeve permitting relative rotation therebetween, and a second position where the clutch elements are engaged to rotationally couple the first side gear and the sleeve, and a force plate configured to capture the coupling feature wherein bi-directional axial movement of the force plate moves the sleeve and second clutch element between first and second positions.

## Description

### FIELD

The present disclosure relates generally to an axle assembly and more particularly to a bi-directional clutch for detecting disengagement.

### BACKGROUND

This section provides background information related to the present disclosure which is not necessarily prior art.

Vehicle drivelines typically include one or more differentials configured to receive input torque and to output differential torque to a plurality of vehicle wheels. Typically, the differential includes a differential case configured to receive input torque, a pair of side gears and a pair of output shafts non-rotatably coupled to a respective one of the side gears and drivingly connected to a respective vehicle wheel. Under some conditions, torque is not desired from the vehicle wheels that are normally driven by the differential. In such conditions, a disconnect system can be used to interrupt torque transmission to the vehicle wheels. Disconnect systems typically include a disconnecting clutch configured to either disconnect the differential case from the torque supply, or to disconnect one or more of the output shafts from the vehicle wheels. Typical force plate applications only push into engagement but do not pull for disengagement. A current method involves an actuator configured to push elements of a clutch interface into engagement but requires a spring situated in between the clutch interface elements to effect disengagement when the actuator force is removed. During disengagement, vehicle intelligence is unable to confirm if and/or when the clutch interface elements have been disengaged by the spring force.

While these configurations work for their intended purpose, there is increasing interest in obtaining positive confirmation that a differential has been disconnected.

### SUMMARY

In accordance with one implementation, a disconnecting differential assembly is provided that includes a differential housing and a differential gearset. The differential housing defines a cavity and is configured to rotate about a first axis. The differential gearset is received in the cavity and has a plurality of differential pinions and first and second side gears. The differential pinions are configured to transmit rotary power between the differential housing and the first and second side gears. The disconnecting differential assembly further includes a first clutch element, a sleeve, a second clutch element, and a force plate. The first clutch element is coupled to the first side gear for rotation therewith, the sleeve is received in the differential housing and is rotatable relative to the differential housing, the sleeve having a coupling feature with axially inboard and outboard engagement surfaces. The second clutch element is fixedly coupled to the sleeve wherein the second clutch element confronts the first clutch element, wherein the sleeve and the second clutch element are axially movable relative to the differential housing along the first axis between a first position, in which the second clutch element is axially spaced apart from the first clutch element to thereby rotationally decouple the first side gear from the sleeve and permit relative rotation therebetween, and a second position, in which the second clutch element is engaged with the first clutch element to thereby rotationally couple the first side gear and the sleeve. The force plate is axially movable along the first axis and is configured to capture the coupling feature on the sleeve between the inboard and outboard engagement surfaces wherein the force plate is configured to move in both an axially inboard direction and an axially outboard direction to thereby move the sleeve and the second clutch element between the first and second positions.

In an implementation, the first clutch element comprises a first dog and the second clutch element comprises a second dog.

In a further implementation, the sleeve comprises an annular hub portion and an annular disc portion wherein the coupling feature comprises a circumferentially extending arcuate tongue at a radially-outermost portion of the annular disc portion, the arcuate tongue having the axially inboard and outboard engagement surfaces. The force plate includes an annular ring having a radially-inwardly opening arcuate groove, wherein the arcuate tongue resides in the arcuate groove. The tongue and the groove are configured in size and shape to allow relative rotation therebetween while the force plate and the sleeve are constrained to move axially together.

### DRAWINGS

The drawings described herein are for illustrative purposes only of selected embodiments and not all possible implementations, and are not intended to limit the scope of the present disclosure.
Figure 1 is a schematic illustration of a vehicle having a front axle assembly with an exemplary disconnecting differential assembly constructed in accordance with the teachings of the present disclosure;
Figure 2 is an isometric, partial-sectional view of the front axle assembly of Figure 1;
Figure 3 is an isometric view of the exemplary disconnecting differential assembly of Figures 1-2, in an implementation;
Figure 4 is an isometric, exploded assembly view of the disconnecting differential assembly as viewed from the left-hand side of Figure 3;
Figure 5 is an isometric, exploded assembly view of the disconnecting differential assembly as viewed from the right-hand side of Figure 3;
Figure 6 is an isometric view showing a clutch portion of the disconnecting differential assembly of Figure 4 in greater detail;
Figure 7 is an isometric view showing a force plate portion of Figure 6 in greater detail;
Figure 8 is an elevation view of the disconnecting differential assembly viewed in the direction of lines 8-8 of Figure 3;
Figure 9 is a cross-sectional view of the disconnecting differential assembly of Figure 8 taken substantially along lines 9-9;
Figure 10 is a cross-sectional view of the disconnecting differential assembly of Figure 8 taken substantially along lines 10-10;
Figure 11 is an isometric view showing a portion of the thrust member of Figure 4 in greater detail;
Figure 12 is a cross-sectional view of the disconnecting differential assembly of Figure 8 taken substantially along lines 12-12; and
Figure 13 is an enlarged, cross-sectional view of a portion of the disconnecting differential assembly that is enclosed substantially by lines 13-13 in Figure 12.

Corresponding reference numerals indicate corresponding parts throughout the several views of the drawings.

### DETAILED DESCRIPTION

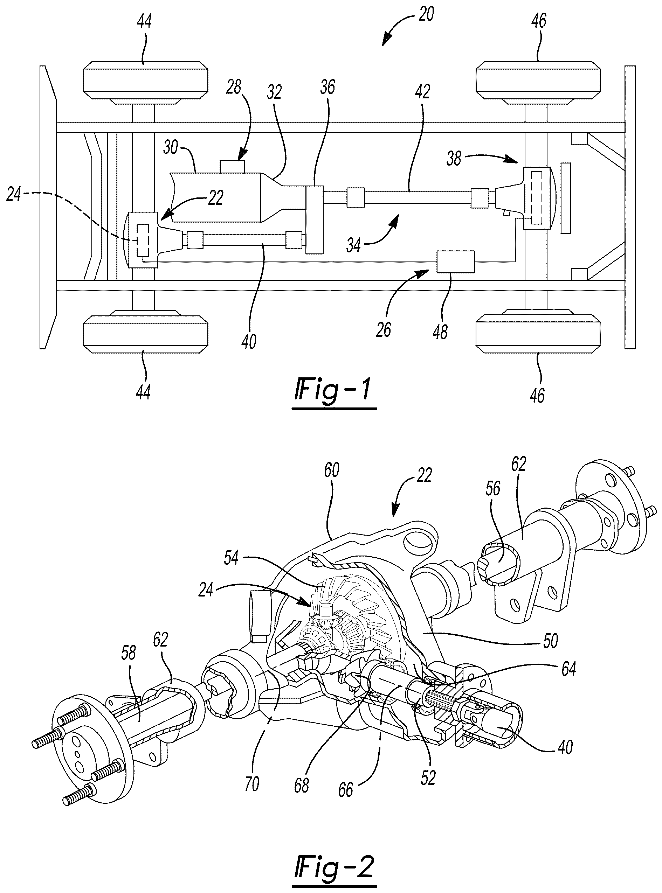

Figure 1 is a schematic illustration of an exemplary vehicle 20 in which a disconnecting differential assembly having a bi-directional differential clutch for detecting disengagement may be used. The vehicle 20 includes a front axle assembly 22 that is shown having a disconnecting differential assembly 24 constructed in accordance with the teachings of the present disclosure. The vehicle 20 is illustrated as a four-wheel drive vehicle 20, although it should be understood that the disconnecting differential assembly 24 described herein can be used in other types of vehicles, such as front-wheel drive, rear-wheel drive, or all-wheel drive vehicles.

The vehicle 20 includes a control system 26, a powertrain 28 with an engine 30 and a transmission 32 that provide rotary power to a drivetrain 34 having a transfer case 36, the front axle assembly 22 and a rear axle assembly 38. Rotary power can be transmitted from the transfer case 36 to the front axle assembly 22 and the rear axle assembly 38 via front and rear propshafts 40, 42, respectively. The front axle assembly 22 can be configured to drive a set of front wheels 44.

The rear axle assembly 38 can be configured to drive a set of rear wheels 46. The configuration of the rear axle assembly 46 can be generally similar to that of the front axle assembly 22 and as such, a description of the front axle assembly 22 will not be repeated with respect to the rear axle assembly 38 (*i.e.,* the rear axle assembly 38 may be constructed to have a disconnecting differential assembly similar to the disconnecting differential assembly 24 described herein). It should be appreciated that other configurations can be used, for example, the front axle assembly 22 can include the disconnecting differential assembly 24, while the rear axle assembly 38 can be configured differently, or does not include a disconnecting differential assembly. In another implementation, the rear axle assembly 38 can include a disconnecting differential assembly similar to the disconnecting differential assembly 24, while the front axle assembly 22 does not include the disconnecting differential assembly 24.

In the illustrated implementation, the control system 26 can include an electronic control module 48. The control module 48 can be any suitable type of electronic controller configured to control operation of the disconnecting differential assembly 24 as described herein. The disconnecting differential assembly 24 can be electrically coupled to the control module 48.

Figure 2 is an isometric, partial-sectional view of the front axle assembly 22 of Figure 1, in an implementation. The front axle assembly 22 is illustrated as including an axle housing assembly 50, an input pinion 52, a ring gear 54, the disconnecting differential assembly 24, and a pair of axle shafts or output shafts 56, 58. The axle housing assembly 50 has a carrier housing 60 and a pair of axle tubes 62 that are coupled to the carrier housing 60. The carrier housing 60 defines a cavity 64 into which the disconnecting differential assembly 24 is received.

Each of the output shafts 56, 58 can be coaxially received through a corresponding one of the axle tubes 62. The output shafts 56, 58 can extend into the cavity 64 and be drivingly coupled to the disconnecting differential assembly 24 to receive rotary power. Each output shaft 56, 58 can be drivingly coupled to one of the front wheels 44.

The input pinion 52 can be mounted to the carrier housing 60 for rotation about a first axis 66. The input pinion 52 can be coupled for rotation with the front propshaft 40 and can include a pinion gear 68 that can be disposed in the cavity 64. The ring gear 54 can be received in the cavity 64 and rotatable about a second axis 70 that can be transverse or generally perpendicular to the first axis 66. The ring gear 54 can be meshingly engaged to the pinion gear 68.

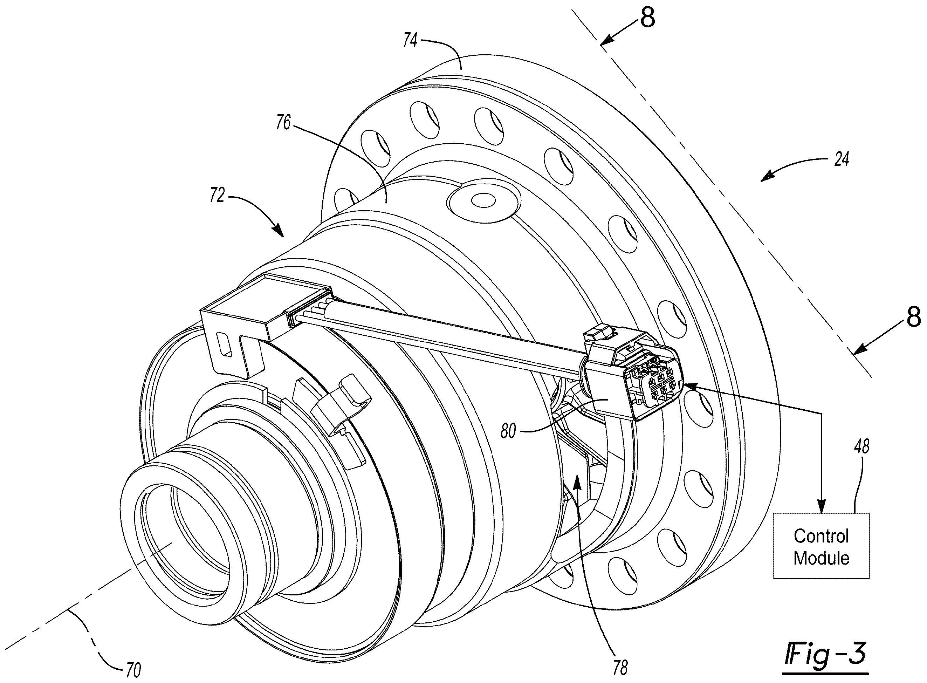

Figure 3 is an isometric view of the disconnecting differential assembly 24, in an implementation. The assembly 24 includes a differential housing 72. The differential housing 72 can be mounted to the axle housing assembly 50 for rotation about the second axis 70, which can be transverse or perpendicular to the first axis 66. The second axis 70 may be referred to herein sometimes as the differential axis 70. The differential housing 72 can be formed as one or more discrete components, such as a first housing member 74 and a second housing member 76. In the illustrated implementation, the first and second housing members 74, 76 can define a differential cavity 78. In the particular example provided, the first and second housing members 74, 76 may be bolted or welded to one another and the ring gear 54. The differential housing 72 constitutes a differential input. The differential assembly 24 further includes an electrical connector 80 configured for electrical connection to the control module 48 for operational functionality described herein.

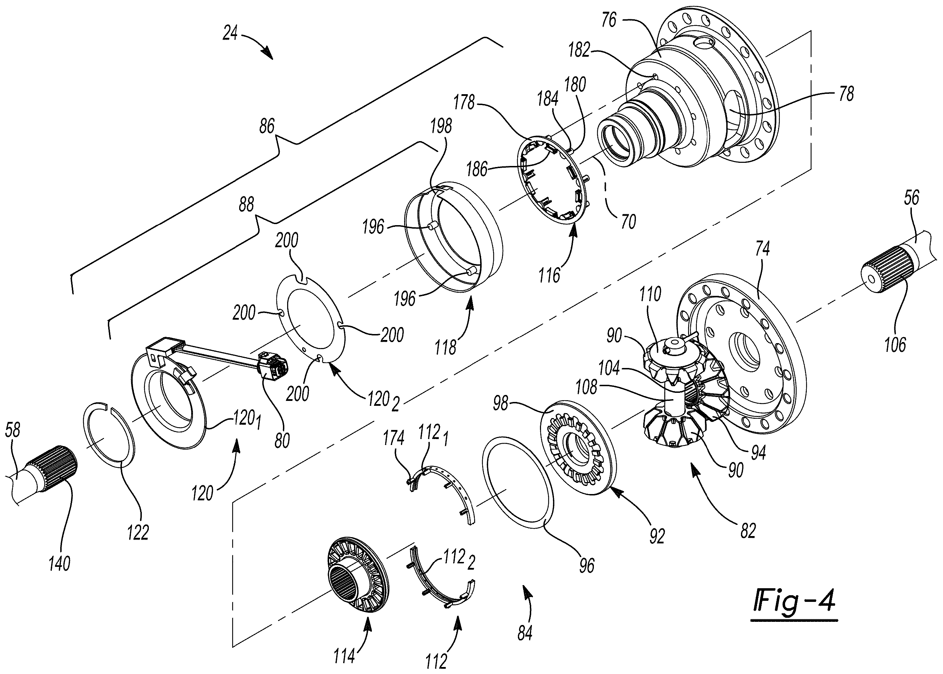

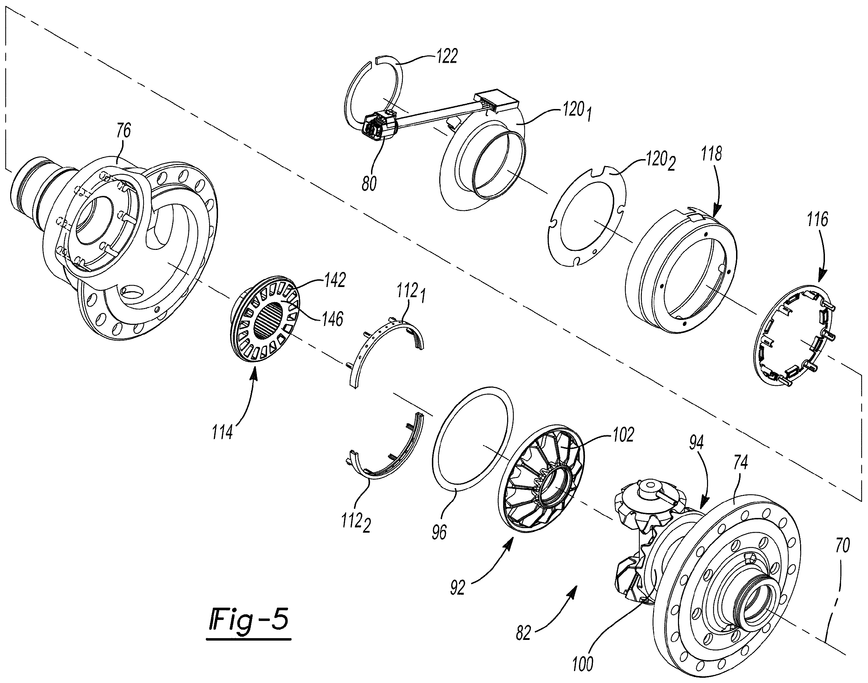

Figure 4 is an isometric and exploded assembly view of the disconnecting differential assembly 24 as viewed from the left-hand side in Figure 3 while Figure 5 is also an isometric and exploded assembly view of the assembly 24 but as viewed from the right-hand side in Figure 3. The disconnecting differential assembly 24 includes the differential housing 72 (first and second housing members 74, 76 in Figure 4), a differential gearset 82, and a clutch 84 that includes an actuator 86 incorporating an electric solenoid 88.

The differential gearset 82 is received in the differential cavity 78 and can be any type of gearset that can receive rotary power from the differential housing 72 as the differential input and output rotary power to the output shafts 56, 58. The differential housing 72 and the differential gearset 82 together constitute a differential mechanism, in an implementation. In the particular example provided, the differential gearset 82 may comprise bevel gearing, such as two or more bevel pinions 90 (i.e., differential pinions 90) that are meshingly engaged with first and second (bevel) side gears 92 and 94, but it should be appreciated that other types of gear arrangements, such as spur or helical gear arrangements, may be employed in the alternative. In this arrangement, the differential gearset 82 is configured to transmit rotary power between the differential housing 72 and the first and second side gears 92, 94. The first and second side gears 92, 94 may also be referred to as first and second differential output gears 92, 94.

The first and second side gears 92 and 94 can be rotatable about the second axis 70 relative to each other and relative to the differential housing 72. A bearing or washer 96 can be disposed on a first side 98 of the first side gear 92. In the example provided, the washer 96 is a flat, annular thrust washer coaxial with the second axis 70 though other configurations can be used. A bearing or washer 100 (Figure 5) can be disposed on one side of the second side gear 94.

The first side gear 92 can be rotatable relative to the output shafts 56, 58. The first side gear 92 can be meshingly engaged with both pinions 90 via teeth 102 (Figure 5). The second side gear 94 can be drivingly coupled to the output shaft 56 in a conventional manner. In the example provided, the second side gear 94 has a set of interior splines 104 that are disposed about the second axis 70 and about an interior of the second side gear 94. The interior splines 104 are meshingly engaged with mating external splines 106 formed on the outer surface of the output shaft 56. The second side gear 94 can be meshingly engaged with both pinions 90.

In the illustrated implementation, the pinions 90 are mounted within the differential cavity 78 to a center pin 108 that is coupled to the differential housing 72 and transverse or perpendicular to the second axis 70. The pinions 90 are mounted to the center pin 108 to be rotatable relative to the differential housing 72 about the center pin 108 and to rotate with the differential housing 72 about the second axis 70. A bearing or washer 110 can be disposed between each pinion 90 and the differential housing 72. In the example provided, the washers 110 are annular, frusto-conical shaped thrust washers coaxial with the center pin 108, though other configurations can be used.

The assembly 24 further includes a force plate 112, shown as two parts 112₁ and 112₂, a shift sleeve 114 (sometimes hereinafter referred to as the sleeve 114), a thrust member 116, a plunger 118, a coil housing 120-shown in two parts 120₁ and 120₂, and a retaining ring 122.

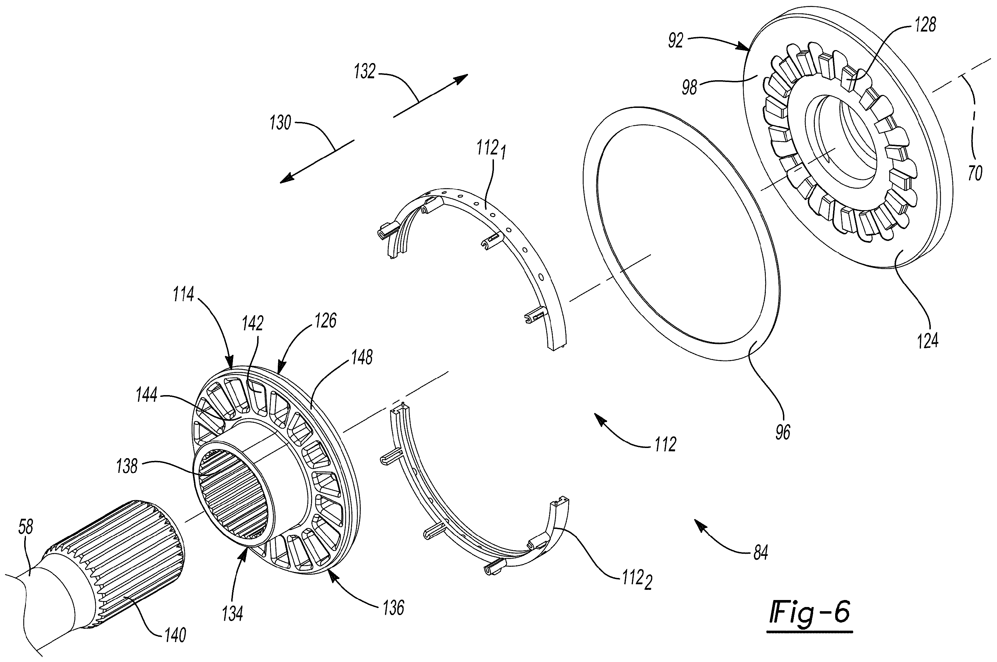

Figure 6 is an isometric view of a portion of Figure 4 showing certain features of the clutch 84 in greater detail. The clutch 84 is functionally configured to shift the disconnecting differential assembly 24 between a first, disengaged mode of operation, in which the first side gear 92 is rotationally decoupled from the output shaft 58, and a second, engaged mode of operation, in which the first side gear 92 is operative to drive the output shaft 58. The clutch 84 can include a first clutch element or first dog 124, a second clutch element or second dog 126, the force plate 112, and the actuator 86. The first clutch element or first dog 124 axially confronts the second clutch element or second dog 126.

The first dog 124 can be fixedly coupled to the first side gear 92 for rotation therewith and can be disposed on the side 98 of the first side gear 92. The side 98 is axially opposite from the side on which the teeth 102 are disposed. In other words, the side 98 is the axial side that is facing in the outboard axial direction 130. Direction 132 is the inboard axial direction. In the illustrated implementation, the first dog 124 has a generally annular shape that is coaxial with the second axis 70. The first dog 124 can include a plurality of first engagement features 128 that can be disposed circumferentially about the second axis 70. The first dog 124 may be unitary with the first side gear 92.

In an implementation, the first engagement features 128 are protrusions or dog teeth that are circumferentially spaced about the second axis 70 and extend axially from the generally flat surface 98 in the outboard axial direction 130. The first engagement features 128 are situated radially-outwardly of the output shafts 56, 58, which reside in the central apertures of the first and second side gears 92, 94. The washer 96 is disposed radially-outwardly of the first engagement features 128 and can contact the surface/side 98 to permit relative rotation between the first dog 128 and the force plate 112.

The shift sleeve 114 is received in the differential housing 72 and is rotatable relative to the differential housing 72. In an implementation, the shift sleeve 114 can be disposed coaxially about the second axis 70 and within the differential cavity 72. The shift sleeve 114 has an annular hub portion 134 and an annular disc portion 136. The annular disc portion 136 comprises the second dog 126. In an implementation, the hub portion 134 can be fixedly coupled to the annular disc portion 136 and thus also to the second dog 126.

The shift sleeve 114 includes a central aperture that extends through the annular hub portion 134 and through the annular disc portion 136 and defines a plurality of internal splines 138 that mate with a plurality of external splines 140 defined on the outer surface of and at an end of the output shaft 58. The second dog 126 can include a plurality of second engagement features 142 (see also Figure 5) configured to engage the first engagement features 128 when the second dog 126 is in the second position (e.g., connected position). The second engagement features 142 can be situated on the annular disc portion 136 radially-outwardly of the annular hub portion 134. The number of second engagement features 142 can be equal to the number of first engagement features 128. In an implementation, the second engagement features 142 are apertures that extend through both opposite axial sides 144 and 146 (Figure 5) of the second dog 126 and are configured to receive the first engagement features 128 (*e.g.*, the protrusions or dog teeth) into the second engagement features 142 (*e.g.,* apertures) when the second dog 126 is in the second position (*e.g.*, connected position) to couple the first and second dogs 124, 126 for common rotation. When the shift sleeve 114 is in the second position, the output shaft 58 and the first side gear 92 rotate together.

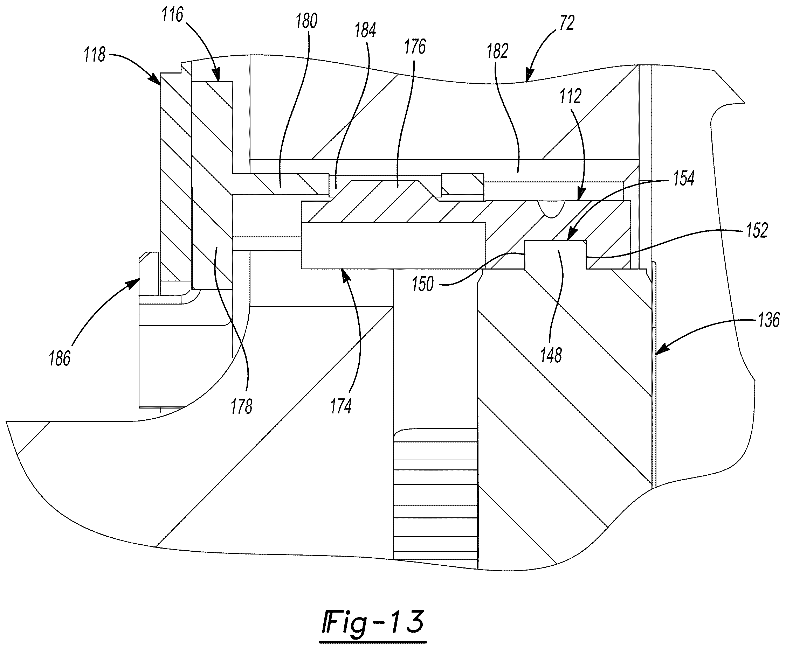

The shift sleeve 114 includes a coupling feature 148 configured to be captured by the force plate 112. This capture allows the force plate 112, through axial movement, to both pull the shift sleeve 114 in the outboard axial direction 130 and push the sleeve 114 in the inboard axial direction 132. Pushing the shift sleeve 114 towards the first side gear 92 causes the first and second dogs 124, 126 to engage while pulling the shift sleeve 114 away from the first side gear 92 causes the first and second dogs 124, 126 to disengage. In an implementation, the coupling feature 148 comprises a circumferentially-extending arcuate tongue 148 at an extreme radially-outermost portion of the annular disc portion 136. In a further implementation, the tongue extends three-hundred and sixty degrees around the circumference of the annular disc portion 136. The coupling feature 148 has first and second engagement surfaces 150, 152 respectively facing in the outboard axial direction 130 and the inboard axial direction 132 (best shown in Figure 13).

With continued reference to Figure 6, the force plate 112 comprises first and second parts 112₁ and 112₂ so as to form an annular ring upon installation of both parts onto the tongue 148 around the entire circumference of the annular disc portion 136. Both parts 112₁ and 112₂ may be the same in construction. The force plate 112 is axially moveable along the second axis 70.

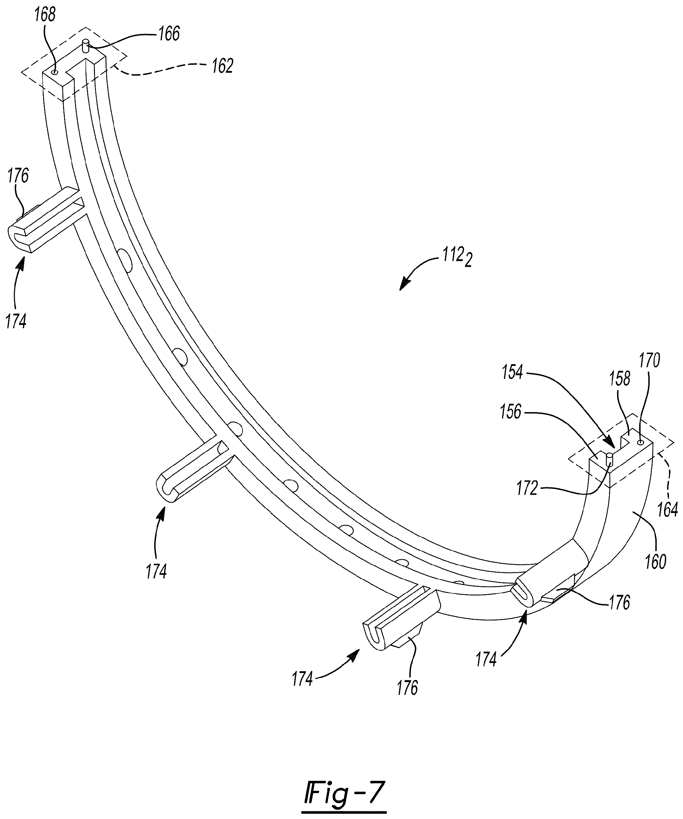

Figure 7 is an enlarged isometric view of the force plate 112₂ of Figure 6. Each of the force plates 112₁ and 112₂ has a generally U-shaped body defining a radially-inwardly opening arcuate groove 154, wherein the body comprises a pair of legs 156, 158 and a connecting bridge 160. The arcuate tongue 148 resides in the arcuate groove 154. The tongue 148 and the groove 154 are configured in size and shape to allow relative rotation therebetween about axis 70. Additionally, by virtue of at least the tongue 148 residing in the groove 154, the force plate 112 and the shift sleeve 114 can move and are constrained to move axially together in both the outboard axial direction 130 and the inboard axial direction 132 (i.e., bi-directionally).

Each force plate part (*e.g.*, part 112₁ and part 112₂) has a first coupling structure 162 and a second coupling structure 164 that is complementary to the first coupling structure 162 that enables the arcuate parts 112₁ and 112₂ to be fixedly coupled with each other to form the annular ring shaped force plate 112. The first coupling structure 162 comprises an inboard projection 166 and an outboard blind bore 168. The second coupling structure 164 comprises an inboard blind bore 170 and an outboard projection 172. The first coupling structure 162 is disposed at a first free end of the arcuate part 112₂ while the second coupling structure 164 is disposed at a second, opposite free end thereof. The grooves 154 of the parts 112₁ and 112₂ are fitted over the tongue 148 of the sleeve 114 wherein the first coupling feature 162 on part 112₁ mates to the second coupling feature 164 on part 112₂ and the second coupling feature 164 of part 112₁ mates to the first coupling feature on part 112₂. As assembled, the tongue 148 resides in the groove 154.

The force plate 112 further includes a plurality of circumferentially disposed posts 174 axially extending in the outboard axial direction 130. Each post 174 includes a connecting projection 176 extending in a generally radially-outwardly direction. The connecting projections 176 are configured to fixedly connect the force plate 112 to the thrust member 116.

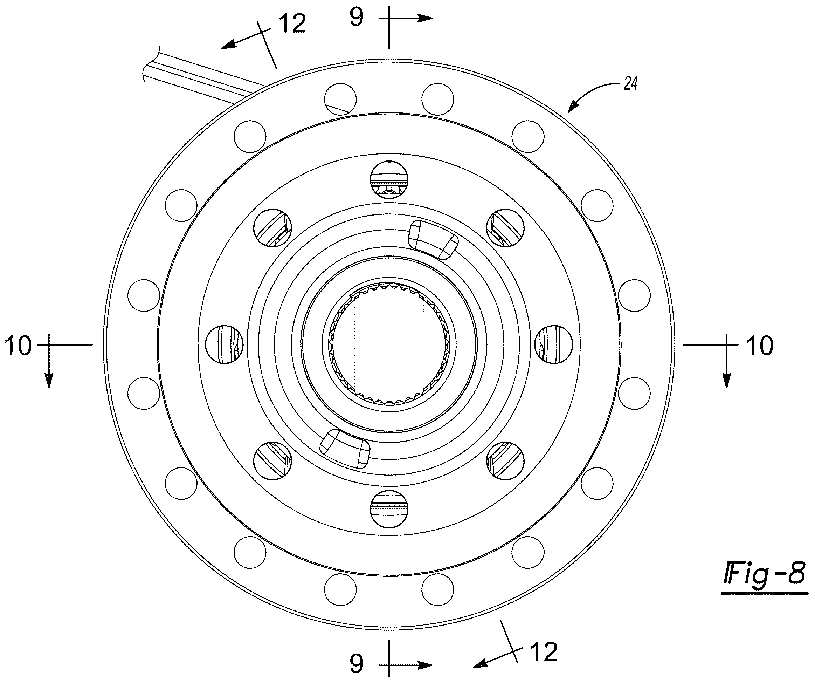

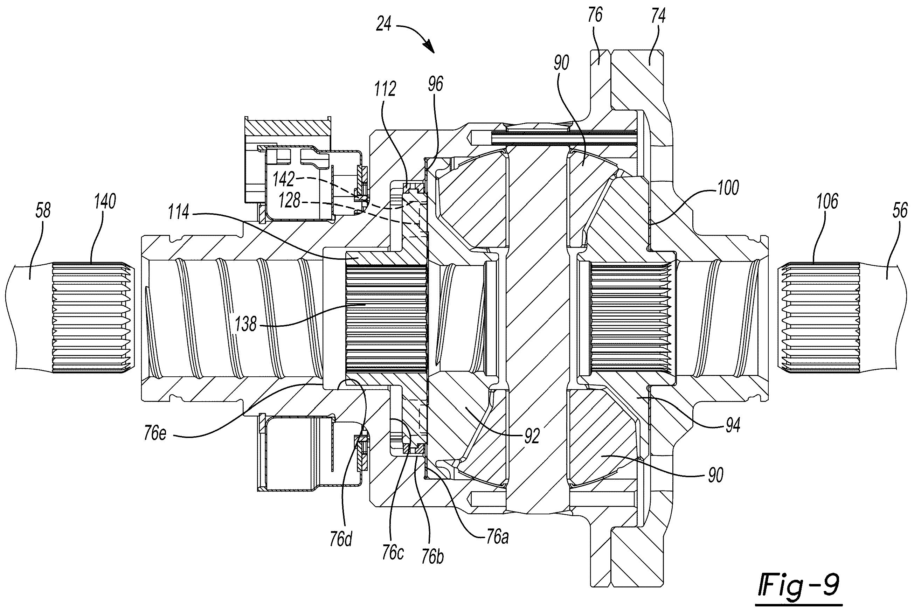

Figure 8 is an elevation view of the disconnecting differential assembly 24 as viewed substantially in the direction of lines 8-8 in Figure 3. Figure 8 provides a frame of reference for the cross-sectional views of Figures 9-10 and Figure 12.

Figure 9 is a cross-sectional view of the disconnecting differential assembly 24 take substantially along lines 9-9 in Figure 8. The cavity 78 of the second housing member 76 comprises a stepped profile including, a first outboard surface 76a, a first circumferential surface 76b, a second outboard surface 76c, a second circumferential surface 76d, and a third outboard surface 76e.

The internal and external splines 138, 140 couple the shift sleeve 114 and the second dog 126 to the output shaft 58 for common rotation therewith, while permitting the shift sleeve 114 and the second dog 126 to translate axially relative to the output shaft 58. The second dog 126 can thus translate, relative to the output shaft 58, between a first position (e.g., a disconnected or disengaged position) and a second position (e.g., a connected or engaged position). In the illustrated implementation, the shift sleeve 114 and the second dog 126 have been moved by the actuator 86 to the second position, in which the second dog 126 is engaged to the first dog 124 to rotationally couple the first side gear 92 and the shift sleeve 114. Since the output shaft 58 is splined to the sleeve 114, the output shaft 58 is rotationally coupled to the first side gear 92 in the second position of the shift sleeve 114. The first engagement features 128 are engaged with the second engagement features 142 as shown in hidden line format.

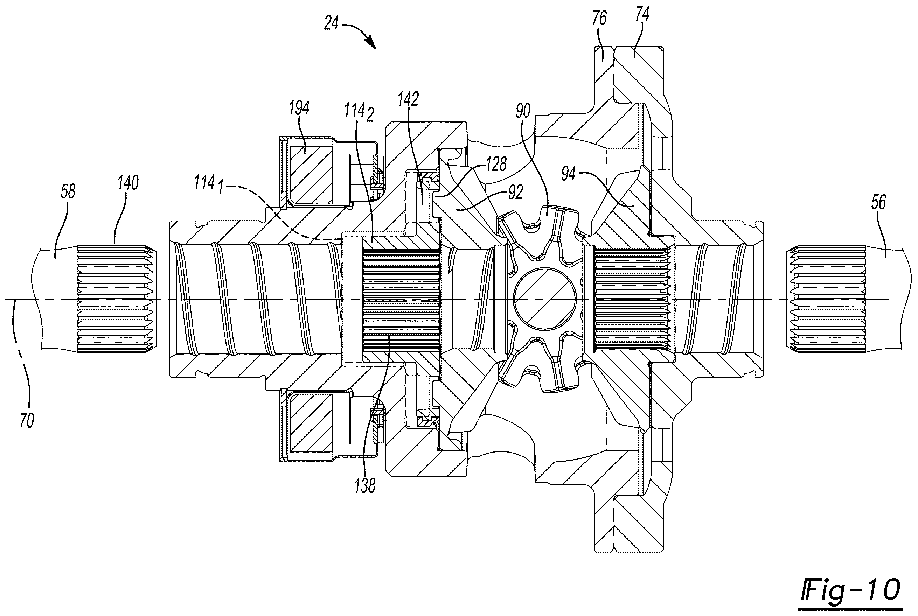

Figure 10 is a cross-sectional view of the disconnecting differential assembly 24 of Figure 8 taken substantially along lines 10-10. In the illustrated implementation, the shift sleeve 114 in the second position, which is designated 114₂, where the first engagement features 128 are engaged with the second engagement features 142.

The shift sleeve 114 and the second dog 126 are axially movable, relative to the differential housing 72 along the second axis 70, to the first position. In the illustrated implementation, the shift sleeve 114 is also shown in dashed line format, which is designated 114₁. In the first position, the shift sleeve 114 and the second dog 126 (*i.e.*, the second clutch element) are spaced apart from the first dog 124 (*i.e.*, first clutch element) along the second axis 70 by at least a first predetermined spacing distance such that the first engagement features 128 are not engaged with the second engagement features 142. Accordingly, the first and second dogs 124, 126 are disengaged. This disengagement permits relative rotation between the first dog 124 (and thus also the first side gear 92) and the second dog 126 (and thus also the shift sleeve 114), such that the sleeve 114 and the output shaft 58 to which it is coupled are rotationally decoupled from the first side gear 92. In an implementation, the first predetermined spacing distance when the sleeve 114 is in the first position is greater than a second predetermined spacing distance when the sleeve 114 is in the second, clutch engaged position. The axial movement of the shift sleeve 114 to and between the first and second positions is achieved through the use of the bi-directional force plate 112 as described herein.

Returning to Figure 4, the thrust member 116 includes a plate portion 178 and a plurality of connecting legs 180 that extend axially in the inboard axial direction 132. Each of the plurality of connecting legs 180 is aligned with and extends into a respective hole 182 in the second housing member 76. Additionally, each of the plurality of legs 180 includes a slot 184 used to fixedly connect the thrust member 116 to the force plate 112. The thrust member 116 also includes a plurality of coupling members 186. The coupling members 186 are configured to couple the plunger 118 to the thrust member 116 such that the plunger 118 and the thrust member 116 move axially together while permitting relative rotational movement with respect to the second axis 70.

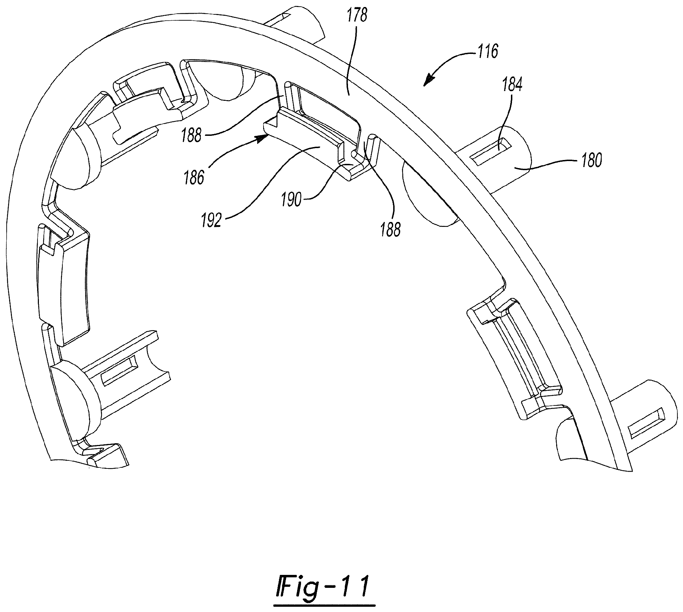

Figure 11 is an enlarged isometric view of the thrust member 116 of Figure 4 showing the legs 180, the slots 184, and the coupling members 186 in greater detail. Each slot 184 may be generally rectangular in shape as shown but will be complementary and cooperate with connecting projections 176 for connecting the thrust member 116 to the force plate 112. Each coupling member 186 includes a pair of hangers 188 that extend radially-inwardly from plate portion 178. Each of the coupling members 186 further includes a planar deck 190 and a retaining lip 192 situated axially outboard of the plate portion 178. The coupling member 186 defines a generally J-shaped channel configured in size and shape to receive a radially-innermost edge of the plunger 118.

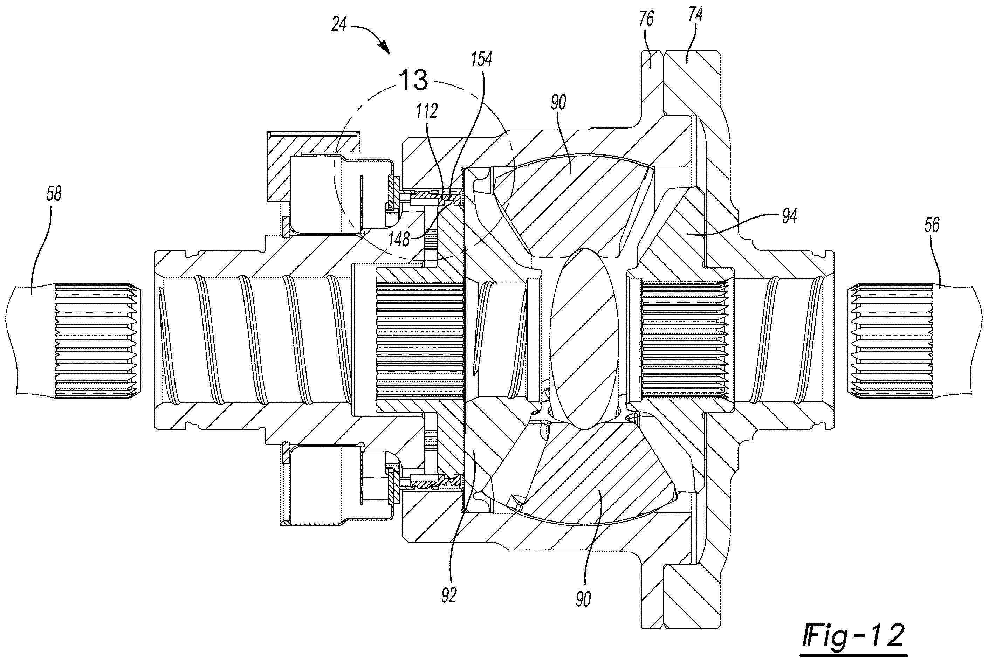

Figure 12 is a cross-sectional view of the disconnecting differential assembly 24 of Figure 8 taken substantially along lines 12-12. In the illustrated implementation, the shift sleeve 114 is in the second, engaged position. Figure 12 particularly illustrates the arcuate groove 154 capturing the arcuate tongue 148 so as to allow bi-directional movement of the shift sleeve 114.

Figure 13 is an enlarged portion of Figure 12 enclosed by the lines designated 13-13. Figure 13 shows the annular disc portion 136 of the sleeve 114 including the arcuate tongue 148, the hole 182 through the housing 72, the post 174 of the force plate 112 positioned in the hole 182, the leg 180 of the thrust member 116 also positioned in the hole 182, and the plunger 118.

The arcuate groove 154 captures the tongue 148, particularly the first and second engagement surfaces 150, 152 thereof. Each of the posts 174 of the force plate 112 aligns with and extends, in the outboard axial direction 130, into a respective one of the holes 182, from the cavity 78 of the differential housing 72. The connecting projections 176 of the posts 174 are disposed in the slots 184 to fixedly connect the thrust member 116 to the force plate 112. The thrust member 116, particularly the plate portion 178, is therefore axially spaced apart from the force plate 112. Also, by virtue of the projection 176 to slot 184 connection, the force plate 114 and the thrust member 116 rotate together with the differential housing 72. The holes 182 are configured in size and shape so as to allow the posts 174 and the legs 180 to move axially therethrough without interference. Thus, the thrust member 116, the force plate 112, and the shift sleeve 114 (by virtue of the force plate-to-sleeve connection) can move and is constrained to axially move together in both the outboard axial direction 130 and the inboard axial direction 132.

The connecting projection 176 is shown residing in the slot 184 to connect the force plate 112 to the thrust member 116. Figure 13 also shows a radially-innermost edge of the plunger 118 being seated in the coupling member 186, which couples the plunger 118 to the thrust member 116.

The force plate 112 is configured to capture the tongue 148 in such a way so as to allow the force plate 112 to push and pull the shift sleeve 114 in the inboard and outboard axial directions to and between the first, disengaged position and the second, engaged position. This arrangement, in an implementation, enables the pulling of the shift sleeve 114 out of engagement to disconnect the differential assembly 24. This arrangement enables the positive detection of when disengagement occurs and thus when disconnection of the differential assembly occurs. This arrangement represents an improvement over a disconnecting differential assembly that uses a spring to bias the clutch out of engagement to the disconnected position. Positive detection of the differential assembly being disconnected is therefore possible due to the positive, controlled pulling action applied to the sleeve 114, in an implementation.

Referring again to Figure 4, the actuator 86 is configured to axially and bi-directionally move the force plate 112 and thus also the shift sleeve 114 having the second dog 126, between the first, disconnected position and the second, connected position. The actuator 86 can be any type of device or linear motor that can be employed to selectively bi-directionally axially translate the sleeve/second dog 126 along the second axis 70 into and out of engagement with the first dog 124. In the illustrated implementation, the actuator 86 comprises an electrically operated actuator including an electric solenoid 88. In an alternative configuration, not specifically shown, the actuator 86 can be another type of linear motor, such as a hydraulic, mechanical, or electro-mechanical linear motor (e.g., hydraulic ram, ball ramp, screw drive, etc.) for selectively axially translating the force plate 112, the shift sleeve 114, the second dog 126 along the second axis 70.

The solenoid 88 can be mounted on the differential housing 72 in a manner that permits rotation of the differential housing 72 relative to the solenoid 88 but which limits axial movement of the solenoid 88 along the second axis 70 in a direction away from the second dog 126. In other words, the solenoid 88 can be axially fixed relative to the differential housing 72, but the differential housing 72 can rotate about the second axis 70 relative to the solenoid 88.

The solenoid 88 can include the housing 120 (parts 120₁ and 120₂), an electromagnetic coil 194 (Figure 10) and the plunger 118. The electromagnetic coil 194 can be located on and/or proximate the housing 120, which approximates a spool in the illustrated implementation. The plunger 118 may include a plurality of rods 196, which in an implementation there are four rods 196-two of which are shown in Figure 4. The plunger 118 also includes a notch 198, which provides a clearance for accommodating the connector 80 when the plunger 118 moves axially in the outboard and inboard directions. The housing part 120₂ includes cutouts 200 that are aligned with the rods 196 and are sized to allow the rods 196 to axially pass therethrough during movement of the plunger 118. The retaining ring 122 may be disposed about an annular portion of the second housing member 76 and may be fixedly coupled thereto to prevent axial outboard movement of the solenoid 88.

The plunger 118 can be selectively moved along the second axis 70 between in response to an energization control signal applied to the electromagnetic coil 194 by the control module 48. In this regard, the electromagnetic coil 194 can be electrically coupled to the control module 48 for control thereof for the operation of the electromagnetic coil 194. The control module 48 can control when and how the electromagnetic coil 194 is energized (*i.e.*, when and how electrical current flows through the electromagnetic coil 194). When the solenoid 88 is thus activated, the electromagnetic coil 194 produces predetermined magnetic fields (not shown) that cause the plunger 118 to axially move so as to move the shift sleeve 114 to and between the above-mentioned first and second positions.

The disconnecting differential assembly 24 can thus be operated in a first mode, in which the actuator 86 is controlled by the control module 48 to axially move the plunger 118 away from the second housing member 76 in the outboard axial direction. The movement of the plunger 118 axially moves the thrust member 116 and the force plate 112 in the same axial direction. In this first mode, the movement of the force plate 112 operates to pull the shift sleeve 114 and the second dog 126 away from the first dog 124 to the first position (*i.e.*, the disconnected differential position). In the first position, the first engagement features 128 are disengaged from the second engagement features 142 where the first side gear 92 is permitted to rotate relative to the differential housing 72 and relative to the second dog 126. Since the first side gear 92 is free to rotate and the disconnecting differential assembly 24 is an open differential, torque is not transferred to either of the output shafts 56, 58.

The disconnecting differential assembly 24 can also be operated in a second mode, in which the actuator 86 is controlled by the control module 48 to axially move the plunger 118 toward the second housing member 76 in the inboard axial direction. The movement of the plunger 118 axially moves the thrust member 116 and force plate 112 in the same axial direction. In this second mode, the movement of the force plate 112 operates to push the shift sleeve 114 and the second dog 126 towards the first dog 124 to the second position (i.e., the connected differential position). In the second position, the first engagement features 128 are engaged with the second engagement features 142 where the first side gear 92 is locked to the output shaft 58 for common rotation. The disconnecting differential assembly 24 is thus operated as an open differential to permit output of differential torque between the output shafts 56, 58.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A disconnecting differential assembly comprising:
a differential housing defining a cavity, the differential housing being configured to rotate about a first axis;
a differential gearset received in the cavity in the differential housing, the differential gearset having a plurality of differential pinions and first and second side gears, the differential pinions configured to transmit rotary power between the differential housing and the first and second side gears;
a first clutch element coupled to the first side gear for rotation therewith;
a sleeve received in the differential housing and being rotatable relative to the differential housing, the sleeve having a coupling feature with first and second engagement surfaces;
a second clutch element fixedly coupled to the sleeve wherein the second clutch element confronts the first clutch element, wherein the sleeve and the second clutch element are axially movable relative to the differential housing along the first axis between a first position, in which the second clutch element is axially spaced apart from the first clutch element to thereby rotationally decouple the first side gear from the sleeve and permit relative rotation therebetween, and a second position, in which the second clutch element is engaged with the first clutch element to thereby rotationally couple the first side gear and the sleeve; and
a force plate being axially movable along the first axis and configured to capture the coupling feature on the sleeve between the first and second engagement surfaces wherein the force plate is configured to move in both an inboard axial direction and an outboard axial direction to thereby move the sleeve and the second clutch element between the first and second positions.

2. The disconnecting differential assembly of claim 1 wherein the first clutch element comprises a first dog and the second clutch element comprises a second dog.

3. The disconnecting differential assembly of claim 1 wherein the sleeve comprises an annular hub portion and an annular disc portion and wherein the coupling feature comprises a circumferentially extending arcuate tongue at a radially-outermost portion of the annular disc portion, the arcuate tongue having the first and second engagement surfaces.

4. The disconnecting differential assembly of claim 3 wherein the force plate comprises an annular ring having a radially-inwardly opening arcuate groove wherein the arcuate tongue resides in the arcuate groove, the tongue and the groove both being configured in size and shape to allow relative rotation therebetween while the force plate and the sleeve move axially together.

5. The disconnecting differential assembly of claim 4 wherein the annular ring comprises a plurality of arcuate parts, each arcuate part having a first coupling structure and a second coupling structure that is complementary with the first coupling structure that enables the arcuate parts to be coupled with each other to form the annular ring.

6. The disconnecting differential assembly of claim 5 wherein the first coupling structure comprises a first projection and a first blind bore at a first free end of the arcuate part wherein the first projection is situated inboard of the first blind bore, and wherein the second coupling structure comprises a second blind bore and a second projection at a second, opposite free end of the arcuate part, wherein the second blind bore is situated inboard of the second projection.

7. The disconnecting differential assembly of claim 4 wherein the force plate comprises a plurality of circumferentially-disposed posts wherein each post axially extends in the outboard axial direction, the force plate further comprising a thrust member having a plate portion and a plurality of legs extending axially from the plate portion in the inboard axial direction, the plurality of posts aligning and fixedly engaging with the plurality of legs to fixedly connect the thrust member with the annular ring wherein the plate portion is axially spaced from the annular ring.

8. The disconnecting differential assembly of claim 1, further comprising an actuator configured to axially move the force plate so as to move the sleeve and the second clutch element between the first and second positions, and wherein the actuator further comprises an electric solenoid and a plunger, wherein the plunger is coupled between the solenoid and the thrust member.

9. The disconnecting differential assembly of claim 1 further comprising a position sensor configured to at least determine when the sleeve and the second clutch element are in the first position where the first side gear is rotationally decoupled from the sleeve.

10. The disconnecting differential assembly of claim 2, wherein the first dog includes a plurality of first engagement features, wherein the second dog includes a plurality of second engagement features, and wherein the first engagement features include a plurality of protrusions that are circumferentially spaced about the first axis and extend in the axially outboard direction from a first axial side of the first dog that is opposite the first side gear, and wherein the second engagement features include a plurality of apertures or recesses that are circumferentially spaced about the first axis, each of the apertures or recesses being configured to receive a corresponding one of the protrusions when the sleeve and the second dog are in the second position.

11. The disconnecting differential assembly of claim 1 further comprising:
an axle housing into which the differential housing is received, the axle housing supporting the differential housing for rotation about the first axis;
a ring gear coupled to the differential housing for common rotation about the first axis;
an input pinion supported by the axle housing for rotation about a second axis, the input pinion being meshingly engaged to the ring gear.

12. The disconnecting differential assembly of claim 1 wherein one of the first and second engagement surfaces face in the outboard axial direction and the other one of the first and second engagement surfaces face in the inboard axial direction.

13. A disconnecting differential assembly comprising:
a differential mechanism having a differential input and differential gearset, the differential input being rotatable about a differential axis, the differential gearset having first and second differential output gears that are rotatable relative to the differential input about the differential axis, the differential gearset configured to transmit rotary power between the differential input and the first and second differential output gears;
a sleeve that is rotatable about the differential axis relative to the differential input and is axially moveable along the differential axis;
a clutch having first and second clutch elements, the first clutch element being fixedly coupled to the first differential output gear, the second clutch element being fixedly coupled to the sleeve, the clutch being operable in a disengaged mode, in which the sleeve is rotationally decoupled from the first differential output gear, and an engaged mode, in which the sleeve is rotatably coupled to the first differential output gear;
an electric actuator including a force plate coupled to the sleeve configured for bidirectional axial movement to thereby push and pull the force plate axially to dispose the coupling in one of the disengaged mode and engaged mode.

14. The disconnecting differential assembly of claim 18 further comprising a sensor configured to detect when the coupling is in the disengaged mode.

15. The disconnecting differential assembly of claim 18 wherein the force plate is a two-part force plate having an arcuate groove, the sleeve having an arcuate tongue disposed at a radially-outermost portion wherein the arcuate tongue resides in the arcuate groove.
